# FASCICULE DE BREVET EUROPEEN

(11) **EP 2 475 510 B1**
(45) Date de publication et mention de la délivrance du brevet: **09.10.2013**
(21) Numéro de dépôt: 10747055.1
(22) Date de dépôt: 30.08.2010
(51) Int. Cl.: B29C 49/48, B29C 33/30

(54) **DISPOSITIF DE MOULAGE ÉQUIPÉ DE MOYENS DE FIXATION PAR ACCROCHAGE D'UN DEMI-MOULE SUR UN PORTE-MOULE**
FORMGERÄT MIT VORRICHTUNG ZUR BEFESTIGUNG EINER HALBFORM AN EINEM FORMHALTER MITTELS VERRIEGELUNG
MOLDING DEVICE PROVIDED WITH MEANS FOR ATTACHING A HALF-MOLD ONTO A MOLD HOLDER BY LOCKING

(30) Priorité: 07.09.2009 FR 0956079
(43) Date de publication de la demande: 18.07.2012
(73) Titulaire: Sidel Participations, 76930 Octeville sur Mer (FR)
(72) Inventeur: LEBLOND, Régis, F-76930 Octeville sur Mer (FR)
(74) Mandataire: Martin, Franck-Olivier
(86) Numéro de dépôt international: PCT/EP2010/062627
(87) Numéro de publication internationale: WO 2011/026805

(56) Documents cités:
- EP-A2- 0 893 221
- WO-A1-2005/042231
- US-A- 5 439 368

## Description

La présente invention concerne un dispositif de moulage pour une machine de fabrication de récipients, notamment des bouteilles.

La présente invention concerne plus particulièrement un dispositif de moulage pour une machine de fabrication de récipients, notamment des bouteilles, en matière thermoplastique par soufflage ou étirage-soufflage d'une préforme préalablement chauffée, le dispositif de moulage comportant :
- deux demi-moules dont chacun est pourvu d'une demi-empreinte d'axe principal vertical et dont chacun comporte une face verticale transversale de joint orientée longitudinalement vers l'avant et une face opposée externe ;
- deux porte-moules dont chacun est muni d'un logement destiné à recevoir un demi-moule associé dans une position montée ; et
- des moyens de fixation par accrochage vertical d'au moins un premier élément de fixation porté par le demi-moule avec un deuxième élément de fixation associé de forme complémentaire porté par un bord vertical du logement, les moyens de fixation étant aptes à fixer de manière démontable chaque demi-moule en position montée dans le logement du porte-moule en immobilisant longitudinalement le demi-moule par rapport au logement.

On connaît de l'état de la technique des dispositifs de moulage destinés à équiper des machines de fabrication de récipients, notamment mais non exclusivement des machines dites "rotatives" comportant un carrousel circonférentiellement pourvu d'un nombre déterminé de postes de soufflage identiques.

La fabrication de récipients en matière plastique, tels que des bouteilles, flacons, etc. y est effectuée à partir de préformes ou d'ébauches préalablement chauffées dans un four de conditionnement thermique. Selon le nombre d'empreinte des moules, une ou plusieurs préformes sont ainsi amenée(s) à un poste de la machine pour être introduite(s) dans un dispositif de moulage auquel sont associés des moyens de soufflage ou d'étirage-soufflage.

De tels dispositifs de moulage comportent au moins un moule constitué de deux demi-moules supportés respectivement par deux porte-moules qui sont montés mobiles l'un par rapport à l'autre.

Chaque demi-moule est généralement fixé à un porte-moule associé de manière amovible par l'intermédiaire de moyens de fixation afin de permettre un démontage en vue d'un échange du moule, en particulier pour procéder à des fabrications de récipients de formes et/ou de dimensions différentes ou encore à leur remplacement en cas d'endommagement et/ou d'usure des demi-moules.

Pour réduire tant les coûts de fabrication que le temps nécessaire à un tel démontage du moule, on a déjà proposé dans le document EP-B1-0.821.641 différents perfectionnements aux dispositifs de moulage.

Selon les enseignements de ce document, des moyens de régulation de la température des empreintes de chaque demi-moule sont réalisés en une pièce distincte (appelée porte-coquille dans ce document) du demi-moule (appelé coquille dans ce document). Le porte-coquille est destiné à être porté à demeure par le porte-moule, tandis que le demi-moule muni de la demi-empreinte est apte à être solidarisé de manière amovible au porte-coquille par l'intermédiaire de moyens de fixation rapide. Cette configuration permet d'obtenir un demi-moule léger facilement manipulable par un opérateur seul.

Les moyens de fixation du demi-moule sur le porte-moule sont disposés sur les bords respectifs du demi-moule et du porte-coquille qui sont parallèles à l'axe principal de l'empreinte. Ces moyens de fixation comportent en particulier des moyens de vissage rapide d'une barre de serrage sur une face de joint du porte-coquille. La barre de serrage comporte des pattes de serrage débordant sur la face de joint du demi-moule pour assurer la fixation du demi-moule solidairement au porte-coquille.

Avec les moyens de fixation connus, les opérations de montage et de démontage sont mises en oeuvre par au moins un opérateur et requièrent l'utilisation d'outils, tels qu'un tournevis ou une clé Allen, pour agir sur les moyens de fixation pendant que les porte-moules sont en position ouverte.

Le document WO-A-2007/012308 propose d'obtenir le serrage du demi-moule contre le fond du logement par un jeu de ressorts qui sont intercalés entre un élément de commande et un élément de base qui porte les pattes de blocage. Le déplacement de l'élément de commande permet, sur une première partie de sa course, de commander le déplacement des pattes de blocage entre une position escamotée transversalement et une position active, puis, sur une deuxième partie de sa course, le serrage des pattes de blocage en position active contre le demi-moule par l'intermédiaire des ressorts.

De tels moyens de fixation et de serrage comportent toutefois de nombreuses pièces mobiles. Ces moyens de fixation sont donc complexes et onéreux à fabriquer.

En outre, les moyens de commande proposés dans ce document nécessitent l'utilisation et la manipulation d'un outil par l'opérateur chargé du montage.

Des autres moyens de fixation du domaine de fabrication par injection sont proposés dans US 5439368 et EP 0893221.

On cherche à réduire encore le temps nécessaire au montage et/ou au démontage des demi-moules (ou coquilles dans le document précité) de manière à réduire encore les temps d'intervention.

Dans ce but, l'invention propose un dispositif de moulage du type décrit précédemment, caractérisé en ce que le deuxième moyen de fixation est fixe transversalement par rapport au porte-moule.

Selon d'autres caractéristiques de l'invention :
- chaque premier élément de fixation est porté de manière rigidement fixe par le porte-moule ;
- chaque deuxième élément de fixation est porté par le porte-moule de manière fixe selon une direction verticale par rapport au logement ;
- l'accrochage du premier élément de fixation avec le deuxième élément de fixation est réalisé par un mouvement de translation verticale du demi-moule par rapport au logement du porte-moule ;
- les moyens de fixation sont des moyens de fixation à baïonnette dans lesquels le demi-moule est monté dans le logement du porte-moule par un premier mouvement longitudinal d'insertion d'un élément de fixation dans l'autre élément de fixation associé puis par ledit mouvement d'accrochage vertical de chaque premier élément de fixation avec le deuxième élément de fixation associé :
- l'un des éléments de fixation associés est formé par une patte transversale, l'autre des éléments de fixation associés étant un passage en forme de "L" qui comporte :
   - un tronçon longitudinal d'insertion de la patte lors du premier mouvement d'insertion ; et
   - un tronçon vertical d'accrochage qui comporte une face de blocage de la patte pour retenir longitudinalement vers l'avant le demi-moule dans le logement du porte-moule après accrochage ;
- les deuxièmes éléments de fixation sont formés par des pattes transversales, et chaque patte s'étend transversalement en saillie par rapport à un bord vertical de l'entrée du logement du porte-moule ;
- au moins un premier élément de fixation est formé par une patte transversale ;
- le porte-moule comporte au moins deux deuxièmes éléments de fixation qui sont alignés verticalement sur un même bord vertical du logement, le demi-moule comportant deux premiers éléments de fixation correspondant ;
- le porte-moule comporte au moins deux deuxièmes éléments de fixation qui sont agencés transversalement de part et d'autre du logement, chacun sur un bord vertical associé, le demi-moule comportant des premiers éléments de fixation correspondant ;
- le dispositif comporte des moyens commandés de serrage du demi-moule en position montée contre le fond du logement ;
- les deuxièmes éléments de fixation sont montés mobiles longitudinalement par rapport au logement entre une position avant de desserrage et une position arrière de serrage dans laquelle chaque deuxième élément de fixation sollicite le premier élément de fixation vers l'arrière ;
- le dispositif comporte des moyens de rappel élastique de chaque deuxième élément de fixation vers sa position arrière de serrage ;
- chaque deuxième élément de fixation est commandé vers sa position avant de desserrage par des moyens pneumatiques ;
- les deuxièmes éléments de fixation agencés sur un même bord vertical du logement sont portés par une barre commune qui est montée mobile longitudinalement par rapport au logement ;
- une chambre pneumatique étanche à l'air est réservée à l'interface entre la barre commune et une face orientée vers l'avant fixe par rapport au logement, et la chambre pneumatique comporte un orifice d'arrivée d'air comprimé afin de permettre le coulissement de des deuxièmes éléments de fixation vers l'avant à l'encontre de l'effort de rappel élastique par augmentation commandée de la pression dans la chambre pneumatique.

D'autres caractéristiques et avantages apparaîtront à la lecture de la description détaillée qui va suivre pour la compréhension de laquelle on se reportera aux dessins annexés parmi lesquels :
- la figure 1 est une vue en perspective qui représente un dispositif de soufflage réalisé selon les enseignements de l'invention et comportant deux porte-moules munis de leur demi-moule ;
- la figure 2 est une vue en perspective qui représente deux demi-moules, réalisés selon l'état de la technique, dans une position disjointe ;
- la figure 3 est une vue en perspective à plus grande échelle qui représente les deux porte-moules de la figure 1 dans une position fermée ;
- la figure 4 est une vue en perspective qui représente un demi-moule équipé de premiers éléments de fixation réalisés selon les enseignements de l'invention ;
- la figure 5 est une vue de côté du demi-moule représenté à la figure 4 ;
- la figure 6 est une vue de devant du demi-moule représenté à la figure 4 ;
- la figure 7 est une vue en perspective éclatée qui représente un porte-moule équipé de deuxièmes moyens de fixation réalisés selon les enseignements de l'invention et complémentaires des premiers moyens de fixation équipant le demi-moule de la figure 4 ;
- la figure 8 est une vue en perspective qui représente en détail l'arrière d'une barre de bordure du porte-moule de la figure 7 ;
- la figure 9 est une vue en coupe selon le plan de coupe 9-9 de la figure 7 lorsque la barre de bordure est montée sur le porte-moule ;
- la figure 10 est une vue en coupe selon le plan de coupe 10-10 de la figure 9 qui représente des moyens de rappel élastique de la barre de bordure vers une position de serrage ;
- la figure 11 est une vue en perspective qui représente le demi-moule de la figure 4 dans une position démontée par rapport au porte-moule de la figure 7 ;
- la figure 12 est une vue de face qui représente le demi-moule après un premier mouvement longitudinal d'insertion dans le logement du porte-moule ;
- la figure 13 est une vue en coupe selon le plan de coupe 12-12 qui représente la position de la patte formant le deuxième élément de fixation dans le passage formant le premier élément de fixation après le premier mouvement longitudinal d'insertion ;
- la figure 14 est une vue similaire à celle de la figure 12 dans laquelle, partant de sa position représentée à la figure 12, le demi-moule a été fixé par accrochage après un deuxième mouvement de translation verticale vers le bas du demi-moule par rapport au porte-moule ;
- la figure 15 est une vue en coupe similaire à celle de la figure 13 qui représente la position de la patte formant le deuxième élément de fixation dans le passage formant le premier élément de fixation après le deuxième mouvement vertical d'accrochage ;
- la figure 16 est une vue en coupe similaire à celle de la figure 15 qui représente la position de la patte formant le deuxième élément de fixation dans le passage formant le premier élément de fixation après serrage de la barre de bordure par les moyens de rappel élastique.

Pour la suite de la description, des éléments présentant des fonctions similaires, analogues ou identiques seront désignés par des mêmes numéros de référence.

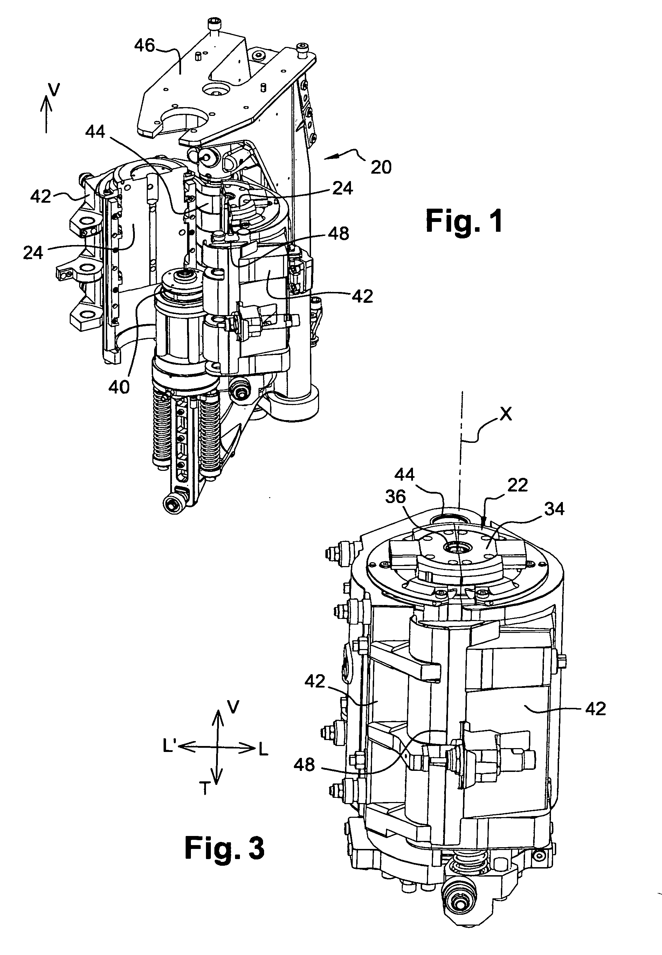

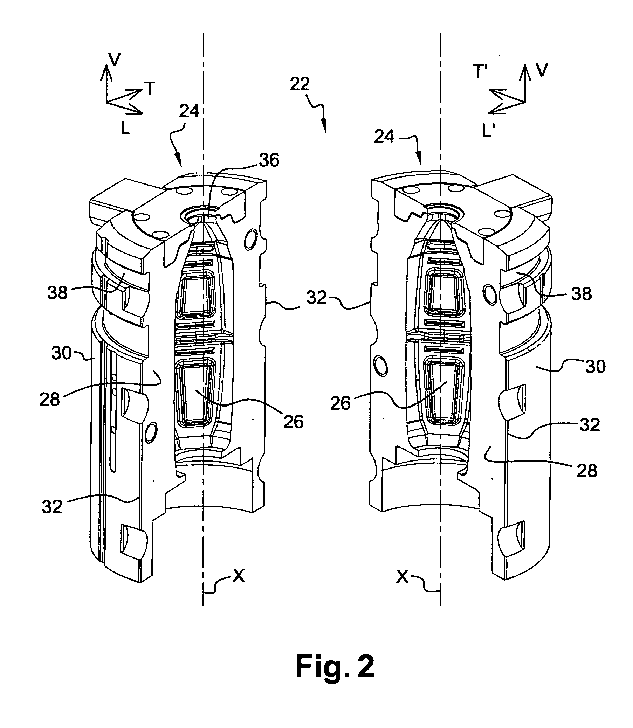

Pour la suite de la description, on adoptera à titre non limitatif pour chaque porte-moule 42 des orientations longitudinale, verticale et transversale indiquées par les trièdres "L,V,T" pour le premier porte-moule 42 agencé à gauche à la figure 1 et "L',V,T'" pour le deuxième porte-moule situé à droite à la figure 2. Les directions transversales "T" et "T'" et longitudinale "L" et "L"' sont ainsi fixes par rapport à chaque porte-moule 42. Pour chaque porte-moule 42, la direction longitudinale "L", "L"' est orientée depuis l'arrière vers l'avant en direction de l'autre porte-moule 42 lorsque les porte-moules 42 sont en position fermée.

On adoptera aussi les termes "intérieur", respectivement "extérieur", pour désigner une face ou une direction tournée vers l'intérieur du logement 50 d'un porte-moule, respectivement vers l'extérieur.

On a représenté à la figure 1, un dispositif de moulage 20 pour une machine (non représentée) de fabrication de récipients, en particulier de bouteilles, en matière thermoplastique par soufflage ou étirage-soufflage d'une préforme préalablement chauffée.

Le dispositif de moulage 20 représenté à la figure 1 ne constitue toutefois qu'un exemple de réalisation non limitatif du type de dispositif de moulage 20 susceptible de recevoir application de moyens de fixation réalisés selon les enseignements de l'invention.

Le dispositif de moulage 20 illustré à la figure 1 est plus particulièrement destiné à équiper un poste d'une machine de fabrication de type "rotative", c'est-à-dire comportant généralement un carrousel (non représenté) à la circonférence duquel sont disposés des postes comprenant chacun un dispositif de moulage 20 associé à des moyens de soufflage ou d'étirage-soufflage, encore appelé tuyère de soufflage.

Cependant, les moyens de fixation démontable selon l'invention sont également susceptibles d'être mis en oeuvre dans une machine de fabrication de type linéaire (et non rotative).

S'agissant de moyens de soufflage ou d'étirage-soufflage, on se reportera par exemple au document FR-A-2.764.544 pour de plus amples détails.

Pour les besoins de la description, on a représenté à la figure 2 un moule 22 réalisé selon l'état de la technique. Le moule 22 est constitué de deux demi-moules 24 qui sont identiques par symétrie par rapport à leur plan de joint. Le moule 22 présente ici une forme cylindrique coupée axialement en deux parties pour former chaque demi-moule 24.

Comme illustré à la figure 2, chaque demi-moule 24 comporte une demi-empreinte 26 du récipient final qui est réalisée en creux dans une face avant de joint 28. La demi-empreinte présente un axe principal vertical "X". La face de joint 28 est ici une face plane verticale transversale qui est formée par la face de section du cylindre formant le moule 22.

Les demi-moules 24 sont susceptibles d'occuper une position disjointe, telle que représentée à la figure 2, dans laquelle les deux demi-moules 24 sont écartés l'un de l'autre, et une position jointe (non représentée) dans laquelle les deux demi-moules 24 sont joints ensemble par leur face de joint 28 pour former le moule 22 cylindrique.

Chaque demi-moule 24 comporte en outre une face arrière 30 qui est opposée à la face de joint 28, et qui présente globalement la forme d'un demi-cylindre de révolution sensiblement coaxial à l'axe principal vertical "X" de l'empreinte 26 du récipient.

Chaque demi-moule 24 présente deux arêtes 32 rectilignes d'orientation verticale qui s'étendent à la jonction entre sa face de joint 28 et sa face arrière 30.

Dans la position jointe, comme représentée à la figure 3, le moule 22 présente une face 34 supérieure horizontale circulaire présentant centralement une ouverture 36 qui est coaxiale à l'axe principal "X" de l'empreinte 36 et qui est destinée à permettre l'introduction de l'air de soufflage, voir d'une tige d'étirage.

De préférence, la face 34 supérieure de chaque demi-moule 24 est formée par deux plaques distinctes, dont chacune est rapportée solidairement sur un demi-moule 24. L'extrémité inférieure d'une tuyère (non représentée) comprenant les moyens de soufflage ou d'étirage-soufflage est destinée-à venir en contact avec la surface de la plaque.

Les demi-moules 24 comportent encore dans leur partie supérieure, juste en dessous de la face supérieure horizontale, une rainure 38 annulaire qui s'étend circonférentiellement de manière continue autour des deux demi-moules 24 lorsqu'ils sont joints.

Lorsque le récipient à fabriquer présente un fond de forme complexe, en particulier pétaloïde, des problèmes de démoulage sont alors susceptibles de survenir.

C'est la raison pour laquelle, on prévoit avantageusement alors un fond de moule 40 séparé, distinct des demi-moules 24, ledit fond de moule 40 comportant une empreinte du fond du récipient complémentaire des demi-empreintes 26, comme illustré à la figure 1.

Chaque demi-moule 24 est destiné à être fixé de manière démontable sur un porte-moule 42 associé du dispositif de moulage 20. De tels porte-moules 42 sont représentés plus en détails aux figures 1 et 3.

Les deux porte-moules 42 sont montés mobiles l'un par rapport à l'autre entre une position fermée, telle que représentée à la figure 3, dans laquelle les deux demi-moules 24 sont joints pour former l'empreinte complète 26, et une position ouverte, telle que représentée à la figure 1 , dans laquelle les deux demi-moules 24 sont disjoints, par exemple pour permettre l'éjection d'un récipient après soufflage.

Dans l'exemple représenté aux figures 1 et 3, les porte-moules 42 sont constitués sous la forme de deux structures porteuses montées articulées autour d'une charnière 44 commune d'axe de pivotement vertical. La charnière 44 est généralement portée par une console 46 qui est fixe par rapport au carrousel.

Les porte-moules 42 sont dès lors susceptibles de s'écarter mutuellement l'un de l'autre en pivotant respectivement autour de l'axe de la charnière et sont en conséquence montés pivotants entre leur position ouverte (figure 1) et leur position fermée (figure 3).

En raison de la cinématique des porte-moules 42, un tel dispositif de moulage 20 est encore appelé moule "portefeuille" (ou *"book-like opening" en anglais*).

Selon une variante non représentée de l'invention, le dispositif de moulage comporte deux porte-moules montés mobiles en translation l'un par rapport à l'autre selon une direction longitudinale, entre une position ouverte et une position fermée.

Le dispositif de moulage 20 comporte un verrou 48 qui est agencé transversalement diamétralement à l'opposé de la charnière 44 par rapport à l'axe vertical "X" de l'empreinte 26 comme représenté à la figure 3.

Un tel verrou 48 est aussi connu et ne sera donc pas décrit plus en détail. Ce verrou 48 présente notamment pour fonction de prévenir toute ouverture inopinée lors du soufflage pour lequel les pressions peuvent atteindre 40 bars.

Pour de plus amples détails sur la structure et le fonctionnement d'un tel verrou 48, on pourra par exemple se reporter au document FR-A-2.646.802 qui décrit globalement un verrou similaire.

Les porte-moules 42 et les demi-moules 24 étant sensiblement de forme identique par symétrie par rapport au plan de joint du moule 22, on ne détaillera par la suite que le porte-moule 42 agencé à gauche à la figure 1, la description étant applicable à l'autre par symétrie.

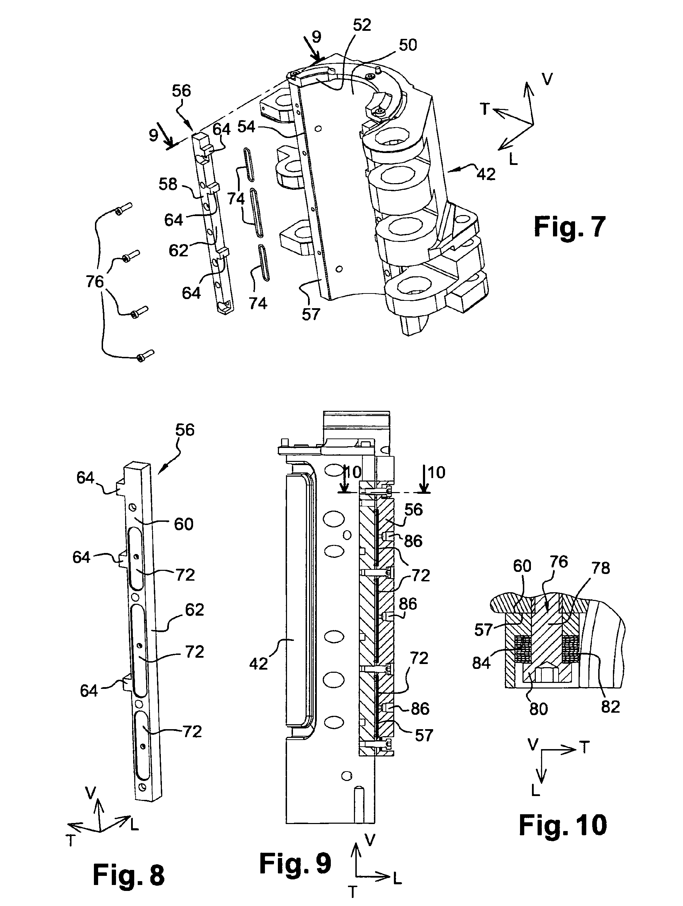

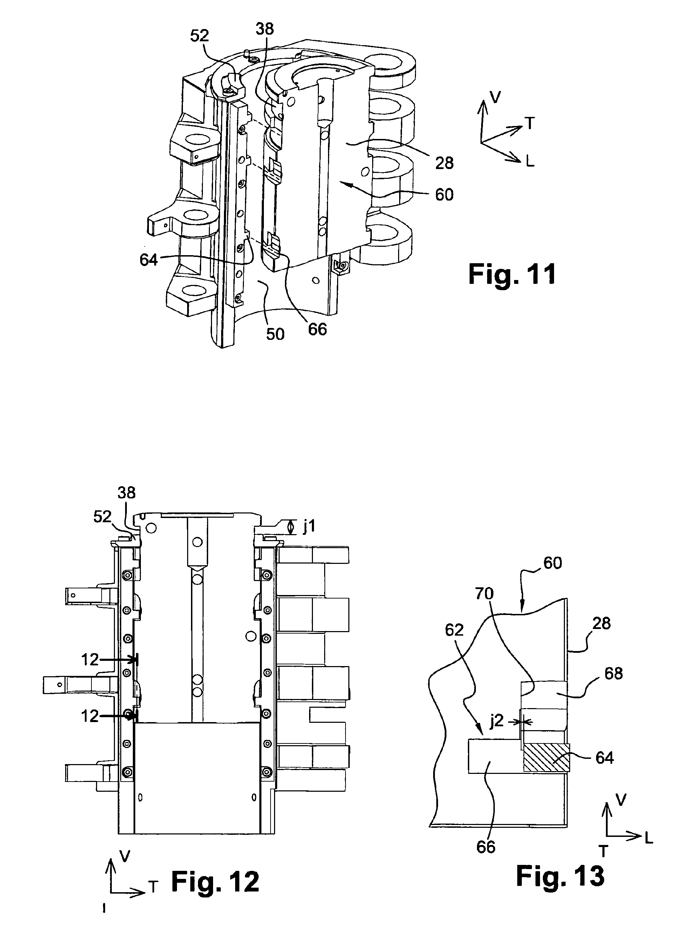

Comme représenté aux figures 7 et 11, le demi-moule 24 est plus particulièrement destiné à être reçu dans un logement 50 du porte-moule 42 associé pour occuper une position montée.

Le dispositif de moulage 20 comporte des moyens de fixation qui sont aptes à fixer de manière démontable chaque demi-moule 24 en position montée dans le logement 50 du porte-moule 42 associé. Ces moyens seront décrits plus en détail par la suite.

Le logement 50 est délimité longitudinalement vers l'arrière par un fond concave de forme hémicylindrique complémentaire de la face arrière 30 du demi-moule 24.

En outre, le logement 50 est délimité verticalement vers le haut par la face inférieure d'un rebord 52 qui s'étend radialement vers l'intérieur en saillie par rapport au fond du logement 50. En position montée du demi-moule 24 dans son logement 50, la rainure 38 du demi-moule 24 est emboîtée longitudinalement avec ce rebord 52 pour permettre le positionnement et le maintien vertical du demi-moule 24 par rapport au porte-moule 42 par appui de la paroi horizontale supérieure de la rainure 38 sur la face horizontale supérieure du rebord 52.

L'entrée du logement 50 est en outre délimitée transversalement par deux bords verticaux 54. Un des bords 54 est notamment visible à la figure 7.

Chaque bord 54 du logement 50 est bordé d'une barre verticale de bordure 56 qui est rapportée et montée sur une face verticale transversale de fixation 57 du porte-moule 42 qui est orientée vers l'avant. Chaque face de fixation 57 du porte-moule 42 est rigidement fixe par rapport au logement 50.

Chaque barre de bordure 56 présente une section horizontale de contour rectangulaire ou carré.

Les deux barres de bordure 56 étant identiques par symétrie par rapport à un plan longitudinal vertical, une seule barre de bordure 56 sera décrite par la suite.

La barre de bordure 56 est notamment délimitée longitudinalement par une face verticale transversale avant d'accostage 58, visible à la figure 7, et par une face verticale transversale arrière de contact 60, visible à la figure 8, par laquelle elle est fixé au porte-moule 42. La barre de bordure 56 est aussi délimitée transversalement par deux faces latérales 62 intérieure et extérieure par rapport au logement 50.

La face d'accostage 58 de la barre de bordure 56 est destinée à venir en contact plan avec la face d'accostage 58 d'une barre de bordure 56 en vis-à-vis de l'autre porte-moule 42 lorsque les porte-moules 42 sont en position fermée. Dans la position montée et fixée du demi-moule 24, sa face de joint 28 est agencée sensiblement dans le même plan que les faces d'accostage 58 des barres de bordure 56 qui bordent le logement 50, comme cela est particulièrement visible à la figure 1.

Par ailleurs, le porte-moule 42 est muni de moyens (non représentés) de régulation de la température de l'empreinte 26 ou du demi-moule 24 qui sont formés par des conduites formées dans l'épaisseur du fond du logement 50 ou dans l'épaisseur du demi-moule 24 et dans lesquelles circule un fluide caloporteur.

Le dispositif de moulage 20 comporte des moyens de fixation aptes à fixer de manière démontable chaque demi-moule 24 en position montée dans le logement 50 du porte-moule 42.

Selon les enseignements de l'invention, les moyens de fixation comportent:
- au moins un premier élément de fixation 62 qui est porté par le demi-moule 60 ;
- un deuxième élément de fixation 64 associé qui est porté par le porte-moule 42 et qui présente une forme complémentaire dudit premier élément de fixation 62.

Chaque premier élément de fixation 62 forme une paire avec le deuxième élément de fixation 64 qui lui est associé. Le premier élément de fixation 62 est destiné à être accroché au deuxième élément de fixation 64 associé par un mouvement vertical d'accrochage de l'un par rapport à l'autre. Les premiers 62 et deuxièmes 64 éléments de fixation sont aptes à fixer de manière démontable chaque demi-moule 60 dans le logement 50 du porte-moule 42 en immobilisant longitudinalement le demi-moule 24 en position montée par rapport au logement 50.

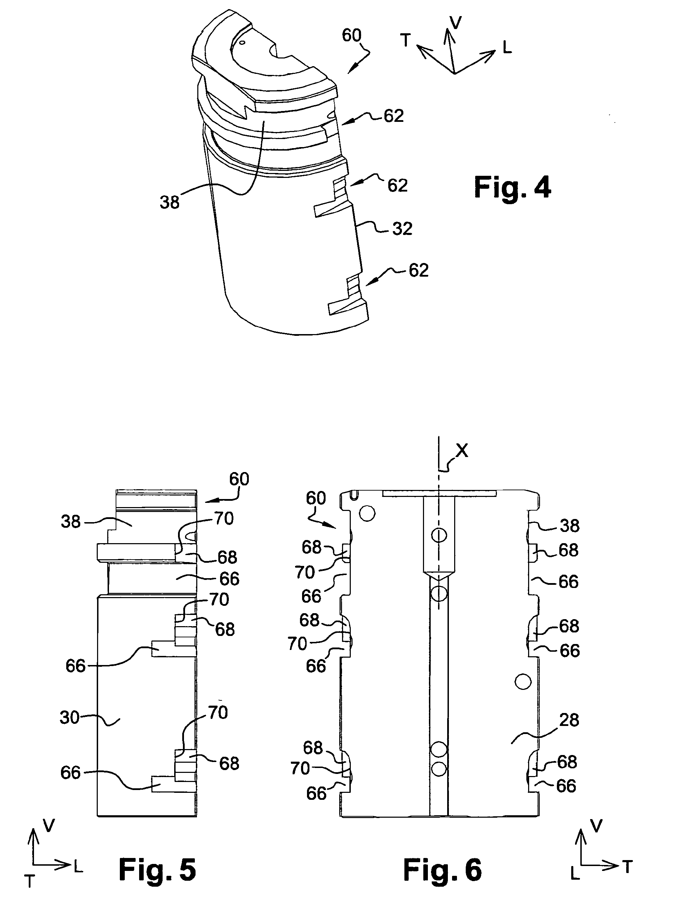

Un mode de réalisation de l'invention a été représenté aux figures 4 à 16.

On a représenté aux figures 4 à 6 un demi-moule 60 réalisé selon les enseignements de l'invention. Ce demi-moule 60 est très similaire au demi-moule 24 réalisé selon l'état de la technique.

Il s'agit ici d'un demi-moule 60 "vierge" qui n'a pas encore été muni de sa demi-empreinte 26 et de sa plaque supérieure. On comprendra cependant que le demi-moule 60 est destiné à être équipé d'une empreinte 26 d'axe vertical "X" de manière similaire au demi-moule 24 représenté à la figure 2.

Seules les différences de structure concernant la fixation démontable entre le demi-moule 24 de l'état de la technique et le demi-moule 60 selon l'invention seront décrites par la suite.

La rainure 38 du demi-moule 60 présente une largeur verticale supérieure à l'épaisseur verticale du rebord 52 du porte-moule 42. Ainsi, le demi-moule 60 est susceptible coulisser verticalement par rapport au logement 50 du porte-moule 42 lorsque le rebord 52 est inséré longitudinalement dans la rainure 38 entre une position haute dite d'insertion et une position basse montée dans laquelle la paroi supérieure de la rainure 38 repose sur la face supérieure du rebord 52.

Le demi-moule 60 comporte en outre des premiers éléments de fixation 62 qui sont agencés le long de ses deux arêtes 32. Chaque arête 32 comporte ici trois premiers éléments de fixation 62.

Les premiers éléments de fixation 62 sont tous identiques. On ne décrira donc qu'un seul premier élément de fixation 62 par la suite.

Le premier moyen de fixation 62 est rigidement fixe dans toutes les directions par rapport au demi-moule 60.

Le premier élément de fixation 62 est un passage en forme de "L" qui est formé par une encoche réalisée dans une arête 32 du demi-moule 60, comme cela est visible à la figure 5.

Le passage 62 comporte plus particulièrement un tronçon longitudinal d'insertion 66 qui s'étend longitudinalement de manière débouchante vers l'avant dans la face de joint 28 et vers l'arrière dans la face arrière 30, comme cela est illustré à la figure 6. Le tronçon d'insertion 66 débouche transversalement vers l'extérieur.

En outre le tronçon d'insertion 66 est délimité verticalement au moins par une face supérieure. Le tronçon d'insertion 66 est ici délimité verticalement par une face supérieure et une face inférieure.

Le passage 62 comporte en outre un tronçon vertical d'accrochage 68 qui s'étend verticalement vers le haut depuis un tronçon d'extrémité avant du tronçon d'insertion 66. Ainsi, une extrémité inférieure du tronçon d'accrochage 68 débouche dans la face supérieure du tronçon d'insertion 66.

Le tronçon d'accrochage 68 est débouchant transversalement vers l'extérieur. Le tronçon d'accrochage 68 est délimité longitudinalement vers l'arrière par une face verticale de blocage 70.

Dans le mode de réalisation représenté aux figures 4 à 6, le tronçon d'accrochage 68 est aussi débouchant longitudinalement vers l'avant dans la face de joint 28. Ainsi, le tronçon d'accrochage 68 est ici formé par une feuillure réalisée dans la face de joint 28 du demi-moule 60.

Dans l'exemple représenté aux figures 4 à 6, on remarque que le tronçon d'insertion 66 des premiers éléments de fixation 62 supérieurs est formé par une gorge horizontale qui est réalisée dans la face arrière 30 du demi-moule 60 et qui débouche par ses deux extrémités dans la face de joint 28. Cette gorge a pour fonction de recevoir la boucle d'un lien qui entoure les deux demi-moules 60 démontés pour les maintenir dans leur position jointe lors de leur rangement.

On a représenté aux figures 7 à 10 un porte-moule 42 équipé des deuxièmes éléments de fixation 64 associés aux premiers éléments de fixation 62 du demi-moule 60.

Les deuxièmes éléments de fixation 64 sont ici formés par des pattes transversales 64 qui s'étendent transversalement en saillie par rapport à un bord vertical 54 de l'entrée du logement 50 du porte-moule 42.

Dans le mode de réalisation représenté aux figures 7 à 10, les pattes transversales 64 sont agencées sur les deux bords 54, transversalement de part et d'autre du logement 50. Les pattes transversales 64 alignées verticalement sur un même bord 54 du logement 50 sont portées par une barre de bordure 56 commune.

Les barres de bordures 56 présentent une structure identique par symétrie par rapport à un plan longitudinal vertical, et elles sont assemblées de la même manière sur le porte-moule 42. Une seule des deux barres de bordure 56 sera donc décrite par la suite.

Chaque patte 64 est portée de manière rigide par la barre de bordure 56. Chaque patte 64 s'étend plus particulièrement transversalement vers l'intérieur depuis la face latérale intérieure 62 de la barre de bordure 56. Avantageusement, les pattes 64 sont réalisées venues de matière avec la barre de bordure 56 qui les portent.

Chaque patte 64 présente des dimensions complémentaires de celles du passage 62 associé de manière à permettre le coulissement longitudinale de chaque patte 64 dans le tronçon d'insertion 66 et un coulissement vertical de chaque pattes 64 dans le tronçon d'accrochage 68, comme cela sera expliqué plus en détail par la suite.

La barre de bordure 56 est montée par appui de sa face arrière 60 contre la face de fixation 57 associée du porte-moule 42.

Comme représenté à la figure 8, la barre de bordure 56 comporte en outre dans sa face arrière 60 des dépressions 72 qui sont ici au nombre de trois.

La fixation de la barre de bordure 56 sur le porte-moule 42 est obtenue par des vis 76 qui sont vissées dans des taraudages associés de la face de fixation 57 du porte-moule 42.

Le porte-moule 42 comporte en outre des moyens commandés de serrage longitudinal du demi-moule 60 en position montée contre le fond du logement 50.

A cet effet, les vis 76 sont vissées de manière à permettre un débattement longitudinal de la barre de bordure 56 par rapport au logement 50 du porte-moule 42. Le débattement longitudinal est très faible, de l'ordre de un millimètre.

Les pattes transversales 64 sont donc montées fixes transversalement et verticalement par rapport au logement 50 du porte-moule 42, mais elles sont montés mobiles longitudinalement par rapport au logement 50 entre une position avant de desserrage et une position arrière de serrage dans laquelle chaque patte 64 est susceptible de solliciter vers l'arrière le demi-moule 60 en position montée en appuyant sur la face de blocage 70, comme cela sera expliqué plus en détail par la suite.

Pour faciliter le coulissement longitudinal de la barre de bordure 56 par rapport au porte-moule 42, comme représenté à la figure 10, la tige longitudinale de la vis 76 comporte un tronçon intermédiaire lisse 78 qui est interposé entre un tronçon fileté de fixation dans le porte-moule 42 et la tête 80 d'extrémité arrière de la vis 76.

Ainsi, la vis 76 est elle-même montée fixe rigidement par rapport au logement 50 du porte-moule 42. Le tronçon lisse 78 forme un moyen de guidage en coulissement longitudinal de la barre de bordure 56 par rapport au logement 50 du porte-moule 42. Ainsi, les pattes 64 sont montées mobile uniquement en coulissement longitudinal par rapport au logement 50 du porte-moule 42.

En outre, les pattes sont rappelées élastiquement vers leur position arrière de serrage. A cet effet, des moyens de rappel élastique tels que des rondelles de Belleville 82 sont interposées entre la tête 80 d'au moins une vis de fixation 76 et une face avant d'appui 84 de la barre de bordure 56.

De plus, les rondelles de Belleville 82 sont avantageusement montées précontraintes de manière à exercer sur la barre de bordure 56 un effort longitudinal de serrage orienté vers l'arrière même lorsque la barre de bordure 56 est en butée contre la face de fixation du porte-moule 42.

Chaque patte 64 est en outre commandée vers sa position avant de desserrage par des moyens pneumatiques.

A cet effet, au moins une chambre pneumatique étanche à l'air est réservée à l'interface entre la face arrière de contact 60 de la barre de bordure 56 et la face de fixation 57 du porte-moule 42.

Ainsi, lorsque la barre de bordure 56 est montée sur la face de fixation 57 du porte-moule 42, ladite face de fixation 57 du porte-moule 42 ferme les dépressions 72 à la manière d'un couvercle pour former la chambre pneumatique 72 comme cela est représenté à la figure 9.

Les chambres pneumatiques 72 sont rendues étanches à l'air par interposition de joints 74 entre la face arrière 60 de la barre de bordure 56 et la face avant de fixation 57 du porte-moule 42. Chaque joint 74 entoure complètement la chambre pneumatique 72 associée pour en assurer l'étanchéité à l'air.

Les joints 74 présentent une épaisseur longitudinale et une élasticité suffisante pour assurer l'étanchéité de la chambre pneumatique 72 pour toutes les positions de la barre de bordure 56 entre sa position arrière de serrage, dans laquelle les joints 74 sont fortement comprimés, et jusqu'à sa position avant de desserrage, dans laquelle les joints 74 sont faiblement comprimés.

Les chambres pneumatiques 72 sont ici au nombre de trois.

Chaque chambre pneumatique 72 comporte un unique orifice 86 pour l'arrivée d'air comprimé afin de commander le coulissement de la barre de bordure 56 vers l'avant à l'encontre de l'effort de rappel élastique des rondelles de Belleville 82 par augmentation commandée de la pression d'air dans la chambre pneumatique 72.

Dans l'exemple représenté à la figure 9, l'orifice d'arrivée d'air 86 est agencé dans la face avant 58 de la barre de bordure 56, ce qui nécessite de raccorder une source d'air comprimé (non représentée) aux orifices d'arrivée d'air 86 lorsque les porte-moules 42 sont en position ouverte.

Selon une variante non représentée de l'invention, et par analogie avec la figure 9, l'orifice d'arrivée d'air 84 est avantageusement réalisé dans la face avant de fixation 57 du porte-moule 42 et il est raccordé à la source d'air comprimé par des conduits (non représentés) réalisés au moins en partie dans l'épaisseur du porte-moule 42. Cette variante permet ainsi de conserver en permanence le raccordement de la chambre pneumatique 72 à la source d'air comprimé. La pression de la chambre pneumatique 72 peut alors être commandée en interposant une vanne trois voies dans la conduite de raccordement. Ainsi, il n'est plus nécessaire de réaliser des opérations de raccordement à chaque montage ou démontage de demi-moule.

Selon une variante non représentée de l'invention, chaque chambre pneumatique est formée par un trou cylindrique d'axe longitudinal qui est réalisé dans la face de fixation du porte-moule et qui est destiné à recevoir en coulissement une tige longitudinale formant piston qui s'étend vers l'arrière depuis la face arrière 60 de la barre de bordure.

Selon une autre variante non représentée de l'invention, les moyens de commande pneumatique sont remplacés par des moyens de commande hydraulique qui présentent une structure analogue aux moyens pneumatiques qui viennent d'être décrits.

Selon encore une autre variante non représentée de l'invention, les pattes transversales d'un même bord sont portées par un composant monté coulissant longitudinalement à l'intérieur de la barre de bordure. La barre de bordure est alors fixée rigidement contre la face de fixation du porte-moule.

On décrit à présent une opération de fixation d'un demi-moule 60 dans le logement 50 d'un porte-moule 42 associé en référence aux figures 11 à 16.

Les moyens de fixation qui viennent d'être décrits sont des moyens d'accrochage à baïonnette qui permettent le montage du demi-moule 60 sur le porte-moule 42 successivement par un premier mouvement d'insertion vers l'arrière par rapport à la direction dans laquelle on veut retenir le demi-moule et un deuxième mouvement d'accrochage dans une direction formant un angle par rapport à la direction de retenue.

Comme représenté à la figure 11, lors du montage du demi-moule 60, le demi-moule 60 est agencé de manière que sa face arrière 30 soit tournée vers le logement 50 à distance en avant du porte-moule 42. Les tronçons d'insertion 66 des passages 62 sont agencés longitudinalement en coïncidences avec les pattes 64 du porte-moule 42.

Pour la suite des opérations de fixation, chaque mouvement est réalisé de manière simultané pour toutes les pattes 64 par rapport au passage 62 qui leur est associé. On ne décrira donc les opérations que pour une seule patte 64 et son passage associé 62.

Lors d'une première étape d'insertion, le demi-moule 60 est déplacé selon un mouvement longitudinal d'insertion par translation longitudinale vers l'arrière par rapport au logement 50 du porte-moule 42. Les pattes 64 sont alors insérées longitudinalement dans les tronçon d'insertion 66 associés, depuis l'extrémité débouchante arrière dudit tronçon 66 jusqu'à ce que la face arrière 30 du demi-moule 60 soit en contact avec le fond du logement 50, comme représenté à la figure 12.

Dans cette position insérée du demi-moule 60, le rebord 52 est reçu longitudinalement dans la rainure 38. Cependant, il demeure un jeu vertical "j1" entre la face supérieure du rebord 52 et la paroi supérieure de la rainure 38. Le demi-moule 60 occupe alors une position haute d'insertion par rapport au logement 50.

De plus, comme représenté à la figure 13, la patte 64 est alors agencée à l'extrémité avant du tronçon d'insertion 66, de manière à être verticalement en vis-à-vis du tronçon d'accrochage 68.

Pour faciliter l'insertion des pattes 64 dans l'extrémité arrière des tronçons d'insertion 66 associés, les faces supérieure et inférieure de chaque tronçon d'insertion 66 sont avantageusement évasées vers l'arrière pour guider le mouvement longitudinal d'insertion.

On remarquera en outre sur cette figure 13 que la patte 64 est légèrement en saillie vers l'avant par rapport à la face de joint 28 du demi-moule 60. Ceci est dû au fait que pendant ce premier mouvement longitudinal d'insertion, de l'air comprimé a été injecté dans les chambres pneumatiques 72 pour faire coulisser les barre de bordure 56, et donc les pattes 64, vers la position avant desserrée. Dans cette position desserrée, on observe qu'il subsiste un jeu longitudinal "j2" entre la face d'extrémité arrière de la patte 64 et la face de blocage 70 du passage 62.

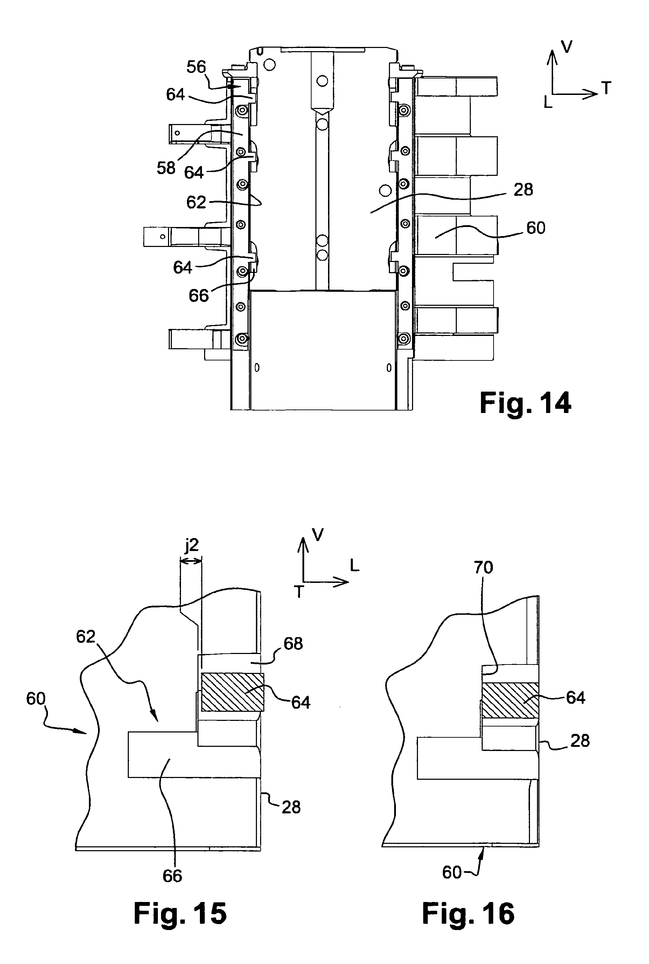

Lors d'une deuxième étape d'accrochage, le demi-moule 60 est ensuite déplacé selon un mouvement vertical d'accrochage par translation verticale vers le bas du demi-moule 60 par rapport au logement 50 du porte-moule 42. Comme représenté à la figure 14, le demi-moule 60 est alors dans sa position montée dans le logement 50.

Le deuxième mouvement vertical d'accrochage est arrêté lorsque la paroi supérieure de la rainure 38 du demi-moule 60 repose sur la face supérieure du rebord 52 du porte-moule 42. La course verticale du demi-moule 60 est donc égale au jeu vertical "j1" représenté à la figure 12.

Comme représenté à la figure 14, lors de ce mouvement vertical d'accrochage, la patte 64 a pénétré dans le tronçon d'accrochage 68 du passage 62 du demi-moule 60 de manière que la face d'extrémité arrière de la patte 64 soit longitudinalement en vis-à-vis de la face de blocage 70 du demi-moule 60.

Pendant ce mouvement vertical d'accrochage, les barres de bordure 56 ont été maintenues dans leur position avant de desserrage en maintenant une pression élevée adaptée dans les chambres pneumatiques 72. Ainsi, le jeu longitudinal "j2" entre la patte 64 et la face de blocage 70 est conservé pendant leur coulissement relatif. Ceci permet de faciliter le coulissement vertical de la patte 64 par rapport au tronçon d'accrochage 68 du passage 62 en évitant les frottements.

Avantageusement, le demi-moule 60 n'est pas en appui vertical sur la patte 64 afin que le positionnement vertical du demi-moule 60 par rapport au porte-moule 42 soit défini uniquement par le contact entre la bordure 52 et la paroi supérieure de la rainure 38.

Dans cette position représentée à la figure 15, les pattes 64 retiennent longitudinalement le demi-moule vers l'avant par contact avec la face de blocage 70.

Enfin, lors d'une troisième étape de serrage, les barres de bordure 56 sont commandées vers leur position de serrage, vers l'arrière par rapport au logement 50, en abaissant la pression d'air dans les chambres pneumatiques 72. Comme représenté à la figure 16, les rondelles de Belleville 82 appuient alors fortement la patte 64 contre la face de blocage 70 du demi-moule 62 pour serrer la face arrière 30 du demi-moule 60 contre le fond du logement 50 du porte-moule 42.

La sollicitation des rondelles de Belleville 82 est avantageusement suffisamment intense pour assurer le plaquage de la face arrière 30 du demi-moule 24 contre le fond du logement 50 de manière qu'il ne reste pas une pellicule d'air susceptible d'isoler thermiquement le demi-moule 24 du porte-moule 42.

Le demi-moule 60 est ainsi immobilisé par rapport au logement 50 :
- longitudinalement vers l'avant par le contact sans jeu entre la patte 64 et la face de blocage 70 du passage 62 du demi-moule 60 ;
- longitudinalement vers l'arrière par le contact sans jeu de la face arrière 30 du demi-moule 60 avec le fond du logement 50 ;
- transversalement dans les deux sens par le contact sans jeu de la face arrière 30 du demi-moule 60 avec le fond du logement 50, du fait de la forme hémicylindrique de la face arrière 30 ;
- verticalement vers le bas par le contact sans jeu entre le rebord 52 du porte-moule 42 et la paroi supérieure de la rainure 38.

En outre le demi-moule 60 n'est pas sollicité verticalement vers le haut par rapport au porte-moule 42 lors du fonctionnement normal du dispositif 20. Cependant, la pression de serrage longitudinale de la face arrière 30 du demi-moule 60 contre le fond du logement 50 du porte-moule 42 permet de créer une force de frottement suffisante pour éviter tout déplacement du demi-moule 60 vers le haut par rapport au porte-moule 42.

Avantageusement, la direction verticale correspond à la direction de la gravité de manière que le poids du demi-moule 60 entraîne le demi-moule 60 depuis sa position haute d'insertion vers sa position basse montée. Ainsi, le poids du demi-moule 60 suffit à maintenir verticalement le demi-moule 60 en position montée préalablement au serrage.

Pour le démontage du moule, ces trois étapes sont réalisées en ordre inverse et, pour chaque étape, les mouvements de translation sont réalisés en sens inverses. La barre est maintenue en position desserrée au moins pendant la deuxième étape.

On comprendra que le mode de réalisation de l'invention décrit précédemment a été donné à titre d'exemple non limitatif. La présente invention couvre aussi les différentes inversions mécaniques possibles.

Ainsi, selon une variante non représentée de l'invention, au moins une patte de fixation est portée par le demi-moule tandis que le passage associé est porté par le porte-moule. Le passage est par exemple réalisé dans la barre de bordure du logement. Le tronçon d'accrochage s'étend alors verticalement vers le bas depuis un tronçon d'extrémité arrière du tronçon d'insertion. Cette inversion mécanique permet de conserver les mêmes étapes de montage et un fonctionnement analogue des moyens de fixation démontable.

## Revendications

1. Dispositif de moulage (20) pour une machine de fabrication de récipients, notamment des bouteilles, en matière thermoplastique par soufflage ou étirage-soufflage d'une préforme préalablement chauffée, le dispositif de moulage (20) comportant :
- deux demi-moules (60) dont chacun est pourvu d'une demi-empreinte (26) d'axe principal vertical et dont chacun comporte une face verticale transversale de joint (28) orientée longitudinalement vers l'avant et une face opposée externe (30) ;
- deux porte-moules (42) dont chacun est muni d'un logement (50) destiné à recevoir un demi-moule (60) associé dans une position montée ; et
- des moyens de fixation (62, 64) par mouvement vertical d'accrochage d'au moins un premier élément de fixation (62) porté par le demi-moule (60) avec un deuxième élément de fixation (64) associé de forme complémentaire porté par un bord vertical (54) du logement (50), les moyens de fixation (62, 64) étant aptes à fixer de manière démontable chaque demi-moule (60) en position montée dans le logement (50) du porte-moule (42) en immobilisant longitudinalement le demi-moule (60) par rapport au logement (50),
**caractérisé en ce que** le deuxième moyen de fixation (64) est fixe transversalement par rapport au porte-moule (42).

2. Dispositif (20) selon la revendication précédente, **caractérisé en ce que** chaque premier élément de fixation (62) est porté de manière rigidement fixe par le porte-moule (42),
et **en ce que** chaque deuxième élément de fixation (64) est porté par le porte-moule (42) de manière fixe selon une direction verticale par rapport au logement (50),
et **en ce que** l'accrochage du premier élément de fixation (62) avec le deuxième élément de fixation (64) est réalisé par un mouvement de translation verticale du demi-moule (60) par rapport au logement (50) du porte-moule (42).

3. Dispositif (20) selon la revendication précédente, **caractérisé en ce que** les moyens de fixation (62, 64) sont des moyens de fixation à baïonnette dans lesquels le demi-moule (60) est monté dans le logement (50) du porte-moule (42) par un premier mouvement longitudinal d'insertion d'un élément de fixation (64) dans l'autre élément de fixation (62) associé puis par ledit mouvement d'accrochage vertical de chaque premier élément de fixation (62) avec le deuxième élément de fixation (64) associé.

4. Dispositif (20) selon la revendication précédente, **caractérisé en ce que** l'un des éléments de fixation associés est formé par une patte (64) transversale, et **en ce que** l'autre des éléments de fixation associés est un passage (62) en forme de "L" qui comporte :
- un tronçon longitudinal d'insertion (66) de la patte (64) lors du premier mouvement d'insertion ; et
- un tronçon vertical d'accrochage (68) qui comporte une face de blocage (70) de la patte (64) pour retenir longitudinalement vers l'avant le demi-moule (60) dans le logement (50) du porte-moule (42) après accrochage.

5. Dispositif (20) selon la revendication précédente, **caractérisé en ce que** les deuxièmes éléments de fixation sont formés par des pattes (64) transversales, et **en ce que** chaque patte (64) s'étend transversalement en saillie par rapport à un bord (54) vertical de l'entrée du logement (50) du porte-moule (42).

6. Dispositif (20) selon l'une quelconque des revendications 4 ou 5, **caractérisé en ce qu'**au moins un premier élément de fixation (62) est formé par une patte transversale.

7. Dispositif (20) selon l'une quelconque des revendications précédentes, **caractérisé en ce que** le porte-moule (42) comporte au moins deux deuxièmes éléments de fixation (64) qui sont alignés verticalement sur un même bord vertical (54) du logement (50), le demi-moule (60) comportant deux premiers éléments de fixation (62) correspondant.

8. Dispositif (20) selon l'une quelconque des revendications précédentes, **caractérisé en ce que** le porte-moule (42) comporte au moins deux deuxièmes éléments de fixation (64) qui sont agencés transversalement de part et d'autre du logement (50), chacun sur un bord vertical (54) associé, le demi-moule (60) comportant des premiers éléments de fixation (62) correspondant.

9. Dispositif (20) selon l'une quelconque des revendications précédentes, **caractérisé en ce qu'**il comporte des moyens commandés de serrage (72, 74, 82, 86) du demi-moule (60) en position montée contre le fond du logement (50).

10. Dispositif (20) selon la revendication précédente, **caractérisé en ce que** les deuxièmes éléments de fixation (64) sont montés mobiles longitudinalement par rapport au logement (50) entre une position avant de desserrage et une position arrière de serrage dans laquelle chaque deuxième élément de fixation (64) sollicite le premier élément de fixation (62) vers l'arrière.

11. Dispositif (20) de fixation selon la revendication précédente, **caractérisé en ce qu'**il comporte des moyens de rappel élastique (82) de chaque deuxième élément de fixation (64) vers sa position arrière de serrage.

12. Dispositif (20) de fixation selon la revendication précédente, **caractérisé en ce que** chaque deuxième élément de fixation (64) est commandé vers sa position avant de desserrage par des moyens pneumatiques (72, 74, 84).

13. Dispositif (20) selon l'une quelconque des revendications précédentes, **caractérisé en ce que** les deuxièmes éléments de fixation (64) agencés sur un même bord vertical (54) du logement (50) sont portés par une barre commune (56) qui est montée mobile longitudinalement par rapport au logement (50).

14. Dispositif (20) selon la revendication précédente, **caractérisé en ce qu'**une chambre pneumatique (72) étanche à l'air est réservée à l'interface entre la barre commune (56) et une face (57) orientée vers l'avant fixe par rapport au logement (50), et **en ce que** la chambre pneumatique (72) comporte un orifice d'arrivée d'air comprimé (86) afin de permettre le coulissement de des deuxièmes éléments de fixation (64) vers l'avant à l'encontre de l'effort de rappel élastique par augmentation commandée de la pression dans la chambre pneumatique (72).

## Patentansprüche

1. Formgebungsvorrichtung (20) für eine Maschine zur Herstellung von Behältern, insbesondere Flaschen, aus thermoplastischem Material durch Blasen oder Streckblasen einer vorher erwärmten Vorform, wobei die Formgebungsvorrichtung (20) aufweist:
- zwei Formhälften (60), von denen jede mit einer Formhohlraumhälfte (26) mit senkrechter Hauptachse versehen ist, und von denen jede eine senkrechte Querverbindungsseite (28), die in Längsrichtung nach vorne ausgerichtet ist, und eine gegenüberliegende Außenseite (30) aufweist;
- zwei Formträger (42), von denen jeder mit einer Aufnahme (50) versehen ist, die dazu bestimmt ist, eine zugeordnete Formhälfte (60) in einer montierten Stellung aufzunehmen; und
- Einrichtungen (62, 64) zur Befestigung durch senkrechte Einhakbewegung mindestens eines ersten von der Formhälfte (60) getragenen Befestigungselements (62) mit einem zugeordneten zweiten Befestigungselement (64) komplementärer Form, das von einem senkrechten Rand (54) der Aufnahme (50) getragen wird, wobei die Befestigungseinrichtungen (62, 64) jede Formhälfte (60) ausbaubar in der montierten Stellung in der Aufnahme (50) des Formträgers (42) befestigen können, indem sie die Formhälfte (60) in Längsrichtung bezüglich der Aufnahme (50) fixieren,
**dadurch gekennzeichnet, dass** die zweite Befestigungseinrichtung (64) quer bezüglich des Formträgers (42) ortsfest ist.

2. Vorrichtung (20) nach dem vorhergehenden Anspruch, **dadurch gekennzeichnet, dass** jedes erste Befestigungselement (62) starr ortsfest vom Formträger (42) getragen wird,
und dass jedes zweite Befestigungselement (64) vom Formträger (42) ortsfest gemäß einer senkrechten Richtung bezüglich der Aufnahme (50) getragen wird,
und dass das Einhaken des ersten Befestigungselements (62) mit dem zweiten Befestigungselement (64) durch eine senkrechte Translationsbewegung der Formhälfte (60) bezüglich der Aufnahme (50) des Formträgers (42) realisiert wird.

3. Vorrichtung (20) nach dem vorhergehenden Anspruch, **dadurch gekennzeichnet, dass** die Befestigungseinrichtungen (62, 64) Bajonett-Befestigungseinrichtungen sind, bei denen die Formhälfte (60) durch eine erste Einführlängsbewegung eines Befestigungselements (64) in das andere zugeordnete Befestigungselement (62) und dann durch die senkrechte Einhakbewegung jedes ersten Befestigungselements (62) mit dem zugeordneten zweiten Befestigungselement (64) in die Aufnahme (50) des Formträger (42) montiert wird.

4. Vorrichtung (20) nach dem vorhergehenden Anspruch, **dadurch gekennzeichnet, dass** eines der zugeordneten Befestigungselemente von einer Querlasche (64) geformt wird, und dass das andere der zugeordneten Befestigungselemente ein "L"-förmiger Durchgang (62) ist, der aufweist:
- einen Längsabschnitt (66) zum Einführen der Lasche (64) bei der ersten Einführbewegung; und
- einen senkrechten Einhakabschnitt (68), der eine Arretierseite (70) der Lasche (64) aufweist, um die Formhälfte (60) in der Aufnahme (50) des Formträgers (42) nach dem Einhaken in Längsrichtung nach vorne zu halten.

5. Vorrichtung (20) nach dem vorhergehenden Anspruch, **dadurch gekennzeichnet, dass** die zweiten Befestigungselemente von Querlaschen (64) geformt werden, und dass jede Lasche (64) sich in Querrichtung bezüglich eines senkrechten Rands (54) des Eingangs der Aufnahme (50) des Formträgers (42) vorstehend erstreckt.

6. Vorrichtung (20) nach einem der Ansprüche 4 oder 5, **dadurch gekennzeichnet, dass** mindestens ein erstes Befestigungselement (62) von einer Querlasche geformt wird.

7. Vorrichtung (20) nach einem der vorhergehenden Ansprüche, **dadurch gekennzeichnet, dass** der Formträger (42) mindestens zwei zweite Befestigungselemente (64) aufweist, die senkrecht auf einem gleichen senkrechten Rand (54) der Aufnahme (50) ausgerichtet sind, wobei die Formhälfte (60) zwei entsprechende erste Befestigungselemente (62) aufweist.

8. Vorrichtung (20) nach einem der vorhergehenden Ansprüche, **dadurch gekennzeichnet, dass** der Formträger (42) mindestens zwei zweite Befestigungselemente (64) aufweist, die quer zu beiden Seiten der Aufnahme (50) angeordnet sind, jedes auf einem zugeordneten senkrechten Rand (54), wobei die Formhälfte (60) entsprechende erste Befestigungselemente (62) aufweist.

9. Vorrichtung (20) nach einem der vorhergehenden Ansprüche, **dadurch gekennzeichnet, dass** sie gesteuerte Einrichtungen (72, 74, 82, 86) zum Klemmen der Formhälfte (60) in der montierten Stellung gegen den Boden der Aufnahme (50) aufweist.

10. Vorrichtung (20) nach dem vorhergehenden Anspruch, **dadurch gekennzeichnet, dass** die zweiten Befestigungselemente (64) bezüglich der Aufnahme (50) zwischen einer vorderen Lösestellung und einer hinteren Klemmstellung in Längsrichtung beweglich montiert sind, in der jedes zweite Befestigungselement (64) das erste Befestigungselement (62) nach hinten beaufschlagt.

11. Befestigungsvorrichtung (20) nach dem vorhergehenden Anspruch, **dadurch gekennzeichnet, dass** sie elastische Rückstelleinrichtungen (82) jedes zweiten Befestigungselements (64) in seine hintere Klemmstellung aufweist.

12. Befestigungsvorrichtung (20) nach dem vorhergehenden Anspruch, **dadurch gekennzeichnet, dass** jedes zweite Befestigungselement (64) durch pneumatische Einrichtungen (72, 74, 84) in seine vordere Lösestellung gesteuert wird.

13. Vorrichtung (20) nach einem der vorhergehenden Ansprüche, **dadurch gekennzeichnet, dass** die auf dem gleichen senkrechten Rand (54) der Aufnahme (50) angeordneten zweiten Befestigungselemente (64) von einer gemeinsamen Stange (56) getragen werden, die bezüglich der Aufnahme (50) in Längsrichtung beweglich montiert ist.

14. Vorrichtung (20) nach dem vorhergehenden Anspruch, **dadurch gekennzeichnet, dass** eine luftdichte pneumatische Kammer (72) an der Schnittstelle zwischen der gemeinsamen Stange (56) und einer nach vorne ausgerichteten Seite (57) ortsfest bezüglich der Aufnahme (50) ausgespart ist, und dass die pneumatische Kammer (72) eine Druckluftzufuhröffnung (86) aufweist, um das Gleiten der zweiten Befestigungselemente (64) nach vorne gegen die elastische Rückstellkraft durch gesteuerte Erhöhung des Drucks in der pneumatischen Kammer (72) zu erlauben.

## Claims

1. Moulding device (20) for a machine for manufacturing containers, notably bottles, from thermoplastic material by blowing or drawing-blowing a preheated preform, the moulding device (20) including:
- two half-moulds (60) each of which is provided with a half-imprint (26) with a vertical main axis and each of which includes a vertical transverse joint face (28) oriented longitudinally toward the front and an opposite external face (30);
- two mould-carriers (42) each of which is furnished with a housing (50) intended to receive an associated half-mould (60) in a mounted position; and
- fixing means (62, 64) by vertical movement of attachment of at least one first fixing element (62) carried by the half-mould (60) to an associated second fixing element (64) of complementary shape carried by a vertical edge (54) of the housing (50), the fixing means (62, 64) being adapted to fix each half-mould (60) in the mounted position in the housing (50) of the mould-carrier (42) demountably and to immobilize the half-mould (60) longitudinally relative to the housing (50),
**characterized in that** the second fixing means (64) are fixed transversely relative to the mould-carrier (42).

2. Device (20) according to the preceding claim, **characterized in that** each first fixing element (62) is carried in a rigidly fixed manner by the mould-carrier (42),
and **in that** each second fixing element (64) is carried by the mould-carrier (42) in a manner fixed in a vertical direction relative to the housing (50),
and **in that** the attachment of the first fixing element (62) to the second fixing element (64) is effected by a movement in vertical translation of the half-mould (60) relative to the housing (50) of the mould-carrier (42).

3. Device (20) according to the preceding claim, **characterized in that** the fixing means (62, 64) are bayonet fixing means in which the half-mould (60) is mounted in the housing (50) of the mould-carrier (42) by a first longitudinal movement of insertion of a fixing element (64) in the associated other fixing element (62) and then by said movement of vertical attachment of each first fixing element (62) to the associated second fixing element (64).

4. Device (20) according to the preceding claim, **characterized in that** one of the associated fixing elements is formed by a transverse lug (64) and **in that** the other of the associated fixing elements is an L-shaped passage (62) that includes:
- a longitudinal section (66) for insertion of the lug (64) during the first insertion movement; and
- a vertical attachment section (68) that includes a face (70) for immobilizing the lug (64) to retain the half-mould (60) in the housing (50) of the mould-carrier (42) in the direction longitudinally toward the front after attachment.

5. Device (20) according to the preceding claim, **characterized in that** the second fixing elements are formed by transverse lugs (64) and **in that** each lug (64) projects transversely relative to a vertical edge (54) of the entrance of the housing (50) of the mould-carrier (42).

6. Device (20) according to either one of Claims 4 or 5, **characterized in that** at least one first fixing element (62) is formed by a transverse lug.

7. Device (20) according to any one of the preceding claims, **characterized in that** the mould-carrier (42) includes at least two second fixing elements (64) that are aligned vertically on the same vertical edge (54) of the housing (50), the half-mould (60) including two corresponding first fixing elements (62).

8. Device (20) according to any one of the preceding claims, **characterized in that** the mould-carrier (42) includes at least two second fixing elements (64) that are arranged transversely on either side of the housing (50), each on an associated vertical edge (54), the half-mould (60) including corresponding first fixing elements (62).

9. Device (20) according to any one of the preceding claims, **characterized in that** it includes selectively operable means (72, 74, 82, 86) for clamping the half-mould (60) in the mounted position against the back of the housing (50).

10. Device (20) according to the preceding claim, **characterized in that** the second fixing elements (64) are mounted to be mobile longitudinally relative to the housing (50) between a front unclamping position and a rear clamping position in which each second fixing element (64) urges the first fixing element (62) toward the rear.

11. Fixing device (20) according to the preceding claim, **characterized in that** it includes return spring means (82) for urging each second fixing element (64) toward its rear clamping position.

12. Fixing device (20) according to the preceding claim, **characterized in that** each second fixing element (64) is driven toward its front unclamping position by pneumatic means (72, 74, 84).

13. Device (20) according to any one of the preceding claims, **characterized in that** the second fixing elements (64) on the same vertical edge (54) of the housing (50) are carried by a common bar (56) that is mounted to be mobile longitudinally relative to the housing (50).

14. Device (20) according to the preceding claim, **characterized in that** an airtight pneumatic chamber (72) is reserved at the interface between the common bar (56) and a face (57) oriented toward the front fixed relative to the housing (50) and **in that** the pneumatic chamber (72) includes a compressed air inlet orifice (86) in order to enable sliding of the second fixing elements (64) toward the front against the return spring force by controlled increase of the pressure in the pneumatic chamber (72).
